# DEMANDE DE BREVET EUROPEEN

(11) **EP 4 817 942 A1**
(43) Date de publication de la demande: **07.10.2026**
(21) Numéro de dépôt: 26167342.0
(22) Date de dépôt: 24.03.2026
(51) Int. Cl.: B60L 53/18, B60R 7/02, B60R 16/02

(54) **ENSEMBLE DE RECHARGE POUR VÉHICULE ÉLECTRIQUE OU HYBRIDE**

(30) Priorité: 26.03.2025 FR 2503100
(71) Demandeur: Renault s.a.s, 92100 Boulogne Billancourt (FR)
(72) Inventeur: BLIN, Fabrice, 78280 GUYANCOURT (FR); DENIER, Véronique, 78280 GUYANCOURT (FR)

(57) **Abrégé**

L'invention concerne un ensemble de recharge (1) pour véhicule automobile. Il comprend :
- Un câble de recharge (2) équipé de deux connecteurs (3, 4) pour le branchement à une source d'alimentation et au port de recharge du véhicule ;
- Un bac de rangement (7) avec une portion creuse ouverte sur le dessus, conçue pour accueillir le câble de recharge (2) ; et
- deux coulisseaux (13, 14) situés aux extrémités du bac, permettant un coulissement dans des glissières parallèles du véhicule. Cet ensemble offre une solution pratique et sécurisée pour stocker le câble de recharge. Le bac le protège de la saleté et de l'humidité, évitant ainsi de salir le véhicule. Son système coulissant libère de l'espace au sol, facilitant le transport d'autres objets. De plus, il est amovible, permettant de libérer l'espace si nécessaire.

## Description

### Domaine de l'invention

La présente invention se rapporte au domaine des véhicules électriques ou hybrides et concerne plus particulièrement un ensemble de recharge pour un tel véhicule. Un tel ensemble de recharge comprend un câble de recharge ainsi qu'un dispositif de rangement conçu pour faciliter le stockage et la manipulation dudit câble.

L'invention concerne également un véhicule automobile équipé d'un tel ensemble de recharge.

### Arrière-plan technologique

De nombreuses solutions de rangement pour câbles de recharge existent déjà sur le marché. Cependant, celles-ci présentent divers inconvénients qui limitent leur efficacité et leur praticité.

Bien que peu coûteux et simples à mettre en œuvre, les sacs de rangement nécessitent un enroulement manuel du câble, ce qui peut s'avérer contraignant, salissant et peu ergonomique. De plus, ils offrent une protection limitée contre les chocs et l'humidité.

Les boîtes de rangement offrent une meilleure protection que les sacs, mais leur encombrement peut poser des problèmes. De plus, l'enroulement manuel du câble reste nécessaire.

Les enrouleurs de câble permettent un enroulement automatique du câble, offrant ainsi un gain de confort. Toutefois, ils peuvent être coûteux, volumineux et parfois complexes à manipuler.

Enfin, les crochets de suspension qui sont fixés aux parois de l'habitacle ou dans le coffre du véhicule permettent de suspendre le câble. Cependant, cette solution, bien que peu onéreuse, expose le câble à la poussière et aux risques de chocs.

### Résumé

La présente invention vise à pallier ces inconvénients en proposant un ensemble de recharge combinant praticité, protection et ergonomie. L'objectif de l'invention est ainsi d'offrir une solution de rangement efficace et facile à utiliser, permettant de stocker le câble de recharge de manière optimisée tout en le protégeant contre l'usure, la saleté et les agressions extérieures.

Dans le but de résoudre ce problème, et selon un premier objet, il est proposé un ensemble de recharge pour un véhicule automobile comportant :
- un câble de recharge qui est équipé de deux connecteurs respectivement configurés pour être branchés à une source d'alimentation électrique et à un port de recharge du véhicule automobile afin de recharger une batterie du véhicule automobile ;
- un bac de rangement qui est apte et destiné à recevoir le câble de recharge et présente une portion creuse qui est ouverte par le dessus et s'étend entre deux extrémités du bac de rangement ; et
- au moins deux coulisseaux qui sont respectivement montés à l'une et l'autre des deux extrémités du bac de rangement et qui sont configurés pour coulisser dans des glissières parallèles du véhicule automobile.

Ainsi, un tel ensemble de recharge offre une solution pratique et sécurisée pour le stockage du câble de recharge. Le bac de rangement protège le câble de recharge contre la saleté et l'humidité, empêchant ainsi de salir l'intérieur du véhicule. De plus, son installation coulissante dans le véhicule permet de libérer de l'espace au sol, facilitant ainsi le transport d'autres objets. Enfin, l'ensemble de recharge peut être facilement retiré du véhicule si nécessaire, offrant ainsi une flexibilité supplémentaire en libérant de l'espace lorsque le câble de chargement n'est pas requis.

Selon des modes de réalisation, un tel ensemble de recharge peut comporter une ou plusieurs des caractéristiques suivantes.

Selon un mode de réalisation, le bac de rangement comporte deux systèmes de maintien en position qui sont respectivement destinés à maintenir l'un et l'autre des deux connecteurs du câble de recharge. Ceci garantit un maintien sécurisé des connecteurs, empêchant ainsi tout mouvement susceptible de provoquer des dommages pendant la conduite.

Selon un mode de réalisation, chaque système de maintien en position comporte un berceau conçu pour accueillir un connecteur, chaque berceau faisant saillie de la portion creuse du bac de rangement et présentant une cavité qui est connectée à la portion creuse grâce à une échancrure permettant un passage du câble de recharge entre la portion creuse et le berceau.

Selon un mode de réalisation, chaque berceau présente une ouverture latérale orientée vers l'extrémité adjacente du bac de rangement, de sorte qu'une partie du connecteur fasse saillie au-delà du berceau.

Selon un mode de réalisation, chaque système de maintien en position comporte en outre un crochet qui fait saillie du bac de rangement, est positionné en regard de l'ouverture latérale du berceau et est dimensionné pour maintenir en position le connecteur.

Selon un mode de réalisation, le câble de recharge est un câble spiralé. Ceci facilite le rangement du câble de recharge dans le bac de rangement.

Selon un mode de réalisation, la portion creuse adopte une section en U qui s'étend le long de la direction longitudinale du bac de rangement. Une telle section est particulièrement adaptée au rangement d'un câble spiralé.

Selon un mode de réalisation, la portion creuse comporte un fond, la portion creuse présentant au moins au niveau du fond un rayon de courbure compris entre Rc et Rc +40 mm, bornes incluses, avec Rc représentant le rayon de courbure d'une hélice formée par le câble de recharge à l'état de repos. Ainsi, la portion creuse est adaptée aux dimensions du câble de recharge spiralé, ce qui permet de limiter son mouvement à l'intérieur du bac de rangement.

Selon un mode de réalisation, le bac de rangement est une pièce monobloc injectée dans un matériau polymère, optionnellement renforcé de fibres. Ainsi, un tel ensemble de rangement est de fabrication simple et économique.

Selon un deuxième objet, il est proposé un véhicule automobile comportant deux glissières parallèles et un ensemble de recharge du type précité ; les deux coulisseaux étant respectivement montés coulissants dans l'une et l'autre des deux glissières.

Selon un mode de réalisation, les deux glissières sont ménagées latéralement de part et d'autre du coffre. Grâce à son installation coulissante, l'ensemble de recharge libère de l'espace au sol dans le coffre, facilitant ainsi le transport d'autres objets. En outre, l'ensemble de recharge peut être positionné dans une position de rangement, située près du dossier de la banquette arrière, optimisant ainsi l'espace de chargement. Lorsqu'il est déplacé vers l'arrière dans une position d'accès, proche du seuil du coffre, il offre une meilleure ergonomie en facilitant la prise en main et le rangement du câble de recharge.

Selon un mode de réalisation, le véhicule automobile comporte en outre une tablette arrière montée articulée et deux supports latéraux fixés latéralement de part et d'autre du coffre et configurés pour supporter la tablette arrière dans une position abaissée de repos ; les deux glissières étant respectivement ménagées dans l'un et l'autre des deux supports latéraux. L'ensemble de recharge offre ainsi une ergonomie optimisée et une grande facilité d'utilisation. Grâce à sa position haute et à son système coulissant, il permet de manipuler le câble de recharge, même s'il est lourd, sans avoir à se baisser. De plus, l'intégration de l'ensemble de recharge est discrète, puisqu'il reste caché sous la tablette arrière lorsque celle-ci est en position abaissée.

### Brève description des figures

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue en perspective d'un ensemble de recharge pour véhicule électrique ou hybride.
[Fig. 2] est une vue arrière en perspective d'un véhicule illustrant l'ensemble de recharge dans une position de rangement avec la tablette arrière en position levée et le hayon en position ouverte.
[Fig. 3] est une vue arrière en perspective d'un véhicule illustrant l'ensemble de recharge dans une position d'accès avec la tablette arrière en position levée et le hayon en position ouverte.
[Fig. 4] est une vue en coupe selon un plan longitudinal du coffre du véhicule illustrant l'ensemble de recharge dans la position de rangement et la tablette arrière dans une position abaissée de repos.

### Description des modes de réalisation

Les orientations exprimées dans la description sont données en référence à un repère orthonormé XYZ, représenté sur les figures, dans lequel X représente la direction longitudinale, orientée de l'avant vers l'arrière du véhicule, Y la direction transversale orientée vers la droite du véhicule, et Z la direction verticale orientée vers le haut du véhicule en position usuelle, reposant sur ses roues.

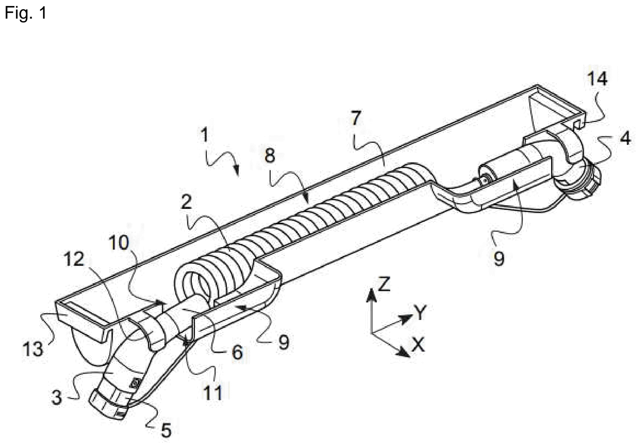

En relation avec les figures 1 à 4, on décrit ci-dessous un ensemble de recharge 1 selon un mode de réalisation.

L'ensemble de recharge 1 comporte un câble de recharge 2 ainsi qu'un bac de rangement 7 agencé pour ranger ledit câble de recharge 2.

La câble de recharge 2 est avantageusement spiralé, c'est-à-dire que, à l'état de repos, en l'absence de contrainte, il adopte une forme hélicoïdale autour de son axe longitudinal. Cette propriété est obtenue grâce à l'utilisation de matériaux à mémoire de forme pour la gaine et/ou les conducteurs électriques. Par exemple, la gaine peut être en PVC ou en PU thermoformé à l'état spiralé, ce qui permet au câble de recharge 2 de retrouver spontanément sa forme spiralée après étirement.

Le câble de recharge 2 est équipé de deux connecteurs 3, 4, l'un destiné à se brancher à une source d'alimentation électrique (comme une borne de recharge ou une prise secteur) et l'autre au port de recharge du véhicule, permettant ainsi la recharge de sa ou ses batteries.

Dans le mode de réalisation représenté, les connecteurs 3, 4 sont des connecteurs coudés, c'est-à-dire qu'ils présentent une partie de connexion 5 qui assure la connexion électrique et une poignée 6 qui est inclinée par rapport à la partie de connexion 5. La poignée 6 permet une prise en main aisée, tandis que le coude entre la poignée 6 et la partie de connexion 5 facilite le branchement et le débranchement en réduisant l'effort nécessaire.

Les connecteurs 3, 4 sont, par exemple, de types complémentaires, l'un étant mâle et l'autre femelle. Ils peuvent notamment être de type 2, c'est-à-dire conformes à la norme IEC 62196-2, ce type de câble étant le mieux adapté à la configuration en cause.

Le câble de recharge 2 présente typiquement une longueur comprise entre 2 et 12 mètres et plus particulièrement entre 6 et 10 mètres. La masse du câble est typiquement comprise entre 2 et 8 kg.

Le bac de rangement 7 présente une portion creuse 8 qui est ouverte par le dessus et qui est destinée à recevoir le câble de recharge 2. Cette portion creuse 8 adopte une section en U qui s'étend le long de la direction longitudinale du bac de rangement 7. Afin d'assurer un maintien optimal du câble de recharge 2 dans son état spiralé au repos, la portion creuse 8 présente au moins au niveau de son fond un rayon de courbure proche de celui de l'hélice formée par le câble de recharge 2. Plus précisément, ce rayon de courbure est compris entre Rc et Rc +40 mm, bornes incluses, avec Rc représentant le rayon de courbure de l'hélice formée par le câble de recharge 2 à l'état de repos. À titre d'exemple, le câble spiralé possède une longueur d'environ 6 m et un rayon de courbure Rc d'environ 40 mm, ce qui lui permet d'adopter une longueur de spirale adaptée à la largeur moyenne du coffre d'un véhicule.

Le bac de rangement 7 est en outre doté de deux systèmes de maintien en position qui sont respectivement destinés à maintenir l'un et l'autre des deux connecteurs 3, 4 dans un espace dédié lorsque la portion spiralée du câble de recharge 2 est logée dans la portion creuse 8. Chaque système de maintien comporte un berceau 9 conçu pour accueillir un connecteur 3, 4. Chaque berceau 9 dépasse vers l'arrière de la portion creuse 8 et présente une cavité. Cette cavité est connectée à la portion creuse 8 grâce à une échancrure 10 ménagée dans la branche arrière de la section en U, permettant ainsi le passage du câble de recharge 2 entre la portion creuse 8 et le berceau 9. De plus, chaque berceau 9 présente une ouverture latérale 11 orientée vers l'extrémité adjacente du bac de rangement 7. Ainsi, la partie de connexion 5 de chaque connecteur 3, 4 fait saillie au-delà du berceau 9 tandis que la poignée 6 repose au moins partiellement dans le berceau 9.

Le bac de rangement 7 comprend également un crochet 12 qui est positionné en regard de l'ouverture latérale 11 du berceau 9 et qui est dimensionné pour maintenir le connecteur 3, 4 en position, empêchant ou limitant tout mouvement indésirable lors du déplacement du véhicule.

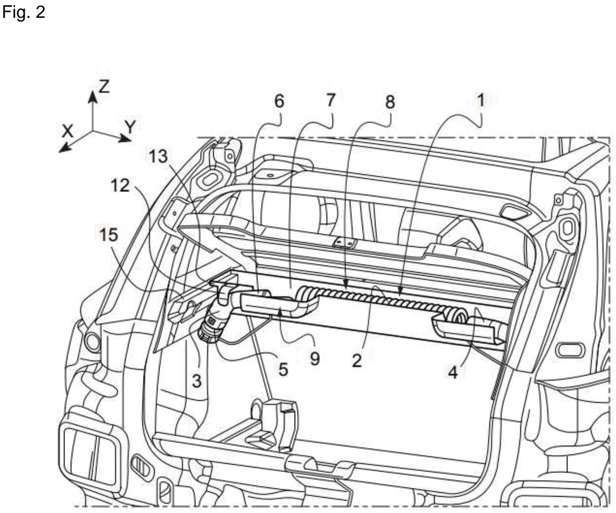

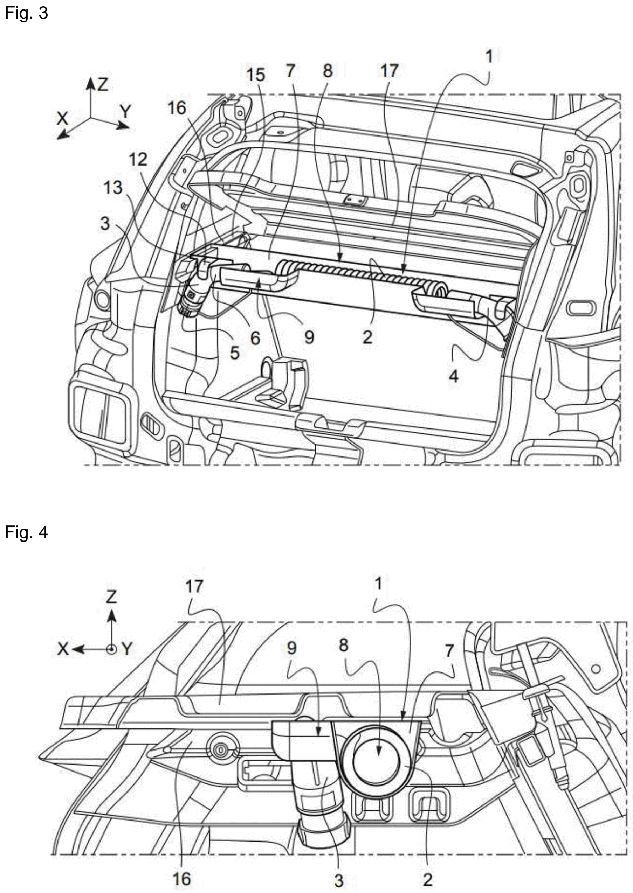

Par ailleurs, le bac de rangement 7 est équipé à chacune de ses deux extrémités d'au moins un coulisseau 13, 14. Ces coulisseaux 13, 14 sont configurés pour coulisser dans des glissières 15 parallèles situées dans l'habitacle du véhicule et dont une seule est représentée sur les figures 2 et 3.

Dans la variante de réalisation représentée sur les figures 2 à 4, les deux glissières 15, parallèles, sont ménagés latéralement de part et d'autre du coffre. Ces glissières 15 sont avantageusement ménagées dans les supports latéraux 16 qui sont fixés de part et d'autre du coffre et configurées pour supporter la tablette arrière 17 lorsqu'elle en position abaissée de repos, telle qu'illustrée sur la figure 4.

Grâce à ces glissières 15, l'ensemble de recharge 1 peut coulisser vers l'arrière depuis une position de rangement, illustrée sur la figure 2, vers une position d'accès, illustrée sur la figure 3. Dans la position de rangement, l'ensemble de recharge 1 est proche du dossier de la banquette arrière, ce qui permet d'optimiser l'espace de chargement du coffre tandis que dans la position d'accès, l'ensemble de recharge 1 est proche du seuil du coffre, ce qui facilite la préhension et le rangement du câble de recharge 2.

Selon un mode de réalisation, le bac de rangement 7 est une pièce monobloc injectée dans un matériau polymère, optionnellement renforcé de fibres, tel que des fibres de verre.

Dans d'autres modes de réalisation, le bac de rangement 7 peut être fabriqué en aluminium extrudé. Cette solution offre une meilleure robustesse, mais elle présente l'inconvénient d'être plus lourde et plus coûteuse. Pour améliorer sa durabilité, une anodisation peut être appliquée, augmentant ainsi sa résistance à l'abrasion et aux rayures.

Selon d'autres variantes, le bac de rangement 7 peut notamment comporter un cadre rigide et une toile flexible qui est fixée audit cadre rigide et forme ainsi la section en U de la portion creuse 8. Ainsi, la toile flexible épouse la forme du câble de recharge 2.

Selon des variantes de réalisation non illustrées, le bac de rangement 7 est équipé d'un système d'éclairage LED pour améliorer la visibilité dans l'obscurité, ou encore d'un dispositif de ventilation destiné à sécher le câble de recharge 2 lorsqu'il est humide.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

L'usage du verbe « comporter », « comprendre » ou «inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Ensemble de recharge (1) pour un véhicule automobile comportant :
- un câble de recharge (2) qui est équipé de deux connecteurs (3, 4) respectivement configurés pour être branchés à une source d'alimentation électrique et à un port de recharge du véhicule automobile afin de recharger une batterie du véhicule automobile ;
- un bac de rangement (7) qui est apte et destiné à recevoir le câble de recharge (2) et présente une portion creuse (8) qui est ouverte par le dessus et s'étend entre deux extrémités du bac de rangement (7); et
- au moins deux coulisseaux (13, 14) qui sont respectivement montés à l'une et l'autre des deux extrémités du bac de rangement (7) et qui sont configurés pour coulisser dans des glissières (15) parallèles du véhicule automobile.

2. Ensemble de recharge (1) selon la revendication 1, dans lequel le bac de rangement (7) comporte deux systèmes de maintien en position qui sont respectivement destinés à maintenir l'un et l'autre des deux connecteurs (3, 4) du câble de recharge (2).

3. Ensemble de recharge (1) selon la revendication 2, dans lequel chaque système de maintien en position comporte un berceau (9) conçu pour accueillir un connecteur (3, 4), chaque berceau (9) faisant saillie de la portion creuse (8) du bac de rangement (7) et présentant une cavité qui est connectée à la portion creuse (8) grâce à une échancrure (10) permettant un passage du câble de recharge (2) entre la portion creuse (8) et le berceau (9).

4. Ensemble de recharge (1) selon la revendication 3, dans lequel chaque berceau (9) présente une ouverture latérale (11) orientée vers l'extrémité adjacente du bac de rangement (7), de sorte qu'une partie du connecteur fasse (3, 4) saillie au-delà du berceau (9).

5. Ensemble de recharge (1) selon la revendication 4, dans lequel chaque système de maintien en position comporte en outre un crochet (12) qui fait saillie du bac de rangement (7), est positionné en regard de l'ouverture latérale (11) du berceau (9) et est dimensionné pour maintenir en position le connecteur (3, 4).

6. Ensemble de recharge selon l'une quelconque des revendications 1 à 5, dans lequel le câble de recharge (2) est un câble spiralé

7. Ensemble de recharge selon la revendication 6, dans lequel la portion creuse (8) adopte une section en U qui s'étend le long de la direction longitudinale du bac de rangement (7).

8. Véhicule automobile comportant deux glissières (15) parallèles et un ensemble de recharge (1) selon l'une quelconque des revendications 1 à 7 ; les deux coulisseaux étant respectivement montés coulissants dans l'une et l'autre des deux glissières (15).

9. Véhicule automobile selon la revendication 8, dans lequel les deux glissières (15) sont ménagées latéralement de part et d'autre du coffre.

10. Véhicule automobile selon la revendication 8 ou 9, comportant en outre une tablette arrière (17) montée articulée et deux supports latéraux (16) fixés latéralement de part et d'autre du coffre et configurés pour supporter la tablette arrière (17) dans une position abaissée de repos et dans lequel les deux glissières (15) sont respectivement ménagées dans l'un et l'autre des deux supports latéraux (16).
